# EUROPÄISCHE PATENTSCHRIFT

(11) **EP 1 317 689 B1**
(45) Veröffentlichungstag und Bekanntmachung des Hinweises auf die Patenterteilung: **01.03.2006**
(21) Anmeldenummer: 00988810.8
(22) Anmeldetag: 29.12.2000
(51) Int. Cl.: G03B 27/32, G03D 13/00

(54) **VORRICHTUNG UND VERFAHREN ZUM BELICHTEN, ENTWICKELN UND SCHNEIDEN VON FOTO-ROLLENMATERIAL**
DEVICE AND METHOD FOR ILLUMINATING, DEVELOPING AND CUTTING PHOTOGRAPHIC MATERIAL IN THE FORM OF A ROLL
DISPOSITIF ET PROCEDE SERVANT A ECLAIRER, A DEVELOPPER ET A DECOUPER DE LA MATIERE PHOTOGRAPHIQUE EN ROULEAUX

(30) Priorität: 15.09.2000 IT BZ000040
(43) Veröffentlichungstag der Anmeldung: 11.06.2003
(73) Patentinhaber: DURST PHOTOTECHNIK A.G., 39042 Brixen (IT)
(72) Erfinder: OBERTEGGER, Franz, I-39042 Brixen (IT)
(74) Vertreter: Secklehner, Günter
(86) Internationale Anmeldenummer: PCT/EP2000/013332
(87) Internationale Veröffentlichungsnummer: WO 2002/023266

(56) Entgegenhaltungen:
- EP-A- 0 638 839
- US-A- 4 260 234
- US-A- 6 108 070

## Beschreibung

### Technisches Gebiet

Die Erfindung betrifft eine Vorrichtung und ein Verfahren zum Belichten, Entwickeln und Schneiden von Foto-Rollenmaterial.

Auf dem Gebiet der Fotografie ist es erforderlich, Fotopapier, das in Rollenform vorliegen kann, anhand eines in einer Kamera belichteten Filmes zu belichten, das belichtete Fotopapier zu entwickeln und zu trocknen und in einzelne Bilder zu schneiden. Hierbei kann der Schritt des Schneidens auch vor dem Entwickeln durchgeführt werden. Um derartige Geräte zunehmend zu automatisieren und hierfür eine hohe Produktivität zu erreichen, müssen möglichst viele Bestandteile eines derartigen Gerätes automatisiert und somit ein in möglichst großem Umfang automatischer Betrieb erreicht werden. Ferner wird zunehmend gewünscht, dass das belichtete und entwickelte Foto-Rollenmaterial in flexibler Art und Weise in einzelne Fotos unterschiedlichen Formats oder auch in längere Bänder geschnitten werden kann. Hierbei ist im Auge zu behalten, dass auf den Bereich, in dem die Belichtung des Fotopapiers stattfindet, möglichst geringe Erschütterungen aufgebracht werden, um eine präzise Belichtung des Fotomaterials zu ermöglichen.

### Stand der Technik

Als Vorbenutzungsgegenstände sind automatisierte Fotolabors bekannt, die Foto-Rollenmaterial von einer Rolle abwickeln, dieses belichten, in einzelne Bilder zerschneiden und entwickeln. Diese Systeme sind jedoch meistens auf ganz bestimmte Formate begrenzt bzw. sind nur innerhalb begrenzter Maße/Formate einstellbar.

### Darstellung der Erfindung

Der Erfindung liegt die Aufgabe zugrunde, eine Vorrichtung und ein Verfahren zum Belichten, Schneiden und Entwickeln von Foto-Rollenmaterial zu schaffen, mit deren Hilfe ein hoher Grad an Automatisierung, Formatflexibilität und ein hoher Durchsatz erreicht werden kann, wobei eine durch äußere Einflüsse ungestörte, kontinuierliche Belichtung des Foto-Rollenmaterials realisiert wird, und eine Einstellung auf andere zu schneidende Längen des Rollenmaterials ohne Umrüstung, rein über Software und Sensorik und mit geringem Papierverlust besonders einfach ist.

Die Lösung dieser Aufgabe erfolgt zum einen durch die im Anspruch 1 beschriebene Vorrichtung.

Demzufolge weist die erfindungsgemäße Vorrichtung eine Belichtungseinheit mit einer zugeordneten Transporteinrichtung, eine Schneideinheit mit einer zugeordneten, fixierbaren Transporteinrichtung und eine Entwicklungseinheit mit einer zugeordneten, fixierbaren Transporteinrichtung auf. Die einzelnen Einheiten sind für die Durchführung der oben genannten Schritte vorgesehen. Jede der Einheiten weist eine Transporteinrichtung auf, um den Transport des Rollenmaterials durch diese Einheit bzw. zur nächsten Einheit zu realisieren. Die Transporteinrichtung der Schneideinheit ist fixierbar, um das Rollenmaterial an einer geeigneten Stelle festzuhalten und zu schneiden bzw. dieses nach einem äußerst kurzen und somit mit der ausreichenden Genauigkeit einstellbaren Weitertransport zu schneiden. Die der Entwicklungseinheit zugeordnete Transporteinrichtung ist ebenfalls fixierbar, um, wie nachfolgend noch genauer beschrieben wird, einen definierten Weitertransport in die Entwicklungseinheit sicherzustellen und insbesondere einen beliebig langen Abschnitt des Rollenmaterials nach dem Schneiden auf die richtige Länge als ein Stück in die Entwicklungseinheit einzubringen.

Die erfindungsgemäße Vorrichtung ist nicht nur für das Belichten, Schneiden und Entwickeln einzelner, vergleichsweise kurzer Fotos geeignet, sondern aufgrund der nachfolgend noch genauer erläuterten Maßnahmen auch für das Belichten, Schneiden und Entwickeln von längeren Bändern aus Fotopapier, die beispielsweise mit einem gesamten Film belichtet worden sein können und deshalb eine Länge von einigen Metern, gemäß einer bevorzugten Ausführungsform bis zu fünf Metern, erreichen können. Diese Flexibilität des erfindungsgemäßen Gerätes wird dadurch erreicht, dass zwischen der Belichtungs- und der Schneideinheit sowie zwischen der Schneid- und der Entwicklungseinheit jeweils ein Pufferungsbehälter vorgesehen ist, der schließ- und öffenbar ist. Im geschlossenen Zustand kann eine Vorderkante des Rollenmaterials über den geschlossenen Behälter zu der jeweils nächsten Einheit geführt werden. Dies gilt beispielsweise für den Transport der Vorderkante einer neuen Fotopapierrolle zwischen der Belichtungs- und der Schneideinheit. Ferner muss in dem bevorzugten Fall, dass die Schneideinheit vor der Entwicklungseinheit vorgesehen ist, die Vorderkante eines neuen Bildes oder eines neuen, belichteten Abschnittes des Rollenmaterials, nachdem ein vorangehender Abschnitt abgetrennt wurde, von der Schneideinheit zu der Entwicklungseinheit transportiert werden. Die Funktion im geschlossenen Zustand ist außerdem immer dort (in all jenen Fällen) gegeben, in denen das Papierformat so groß ist, dass das zu belichtende Papier bereits von geschnittenem Papier getrennt ist.

Ferner sind die Pufferungsbehälter öffenbar, um eine vorteilhafte Pufferung des Rollenmaterials zu realisieren, was das erfindungsgemäße Gerät auch für die Belichtung und Entwicklung längerer Abschnitte von Rollenmaterial geeignet macht, ohne die Belichtungsqualität zu gefährden , d.h. Belichten, Schneiden, Transportieren, Entwickeln kann in einem kontinuierlichen Prozess ohne Anhalten des belichteten Fotopapiers resp. Unterbrechung der Belichtung erfolgen. Insbesondere wird beispielsweise die Vorderkante des Rollenmaterials an der Schneideinheit mittels der zugeordneten, fixierbaren Transporteinrichtung fixiert, wenn ein Schneidvorgang durchgeführt werden soll, und die Belichtung kann in vorteilhafter Weise fortgeführt werden, so dass die Belichtung ununterbrochen vorgenommen werden kann. Dementsprechend transportiert die der Belichtungseinheit zugeordnete Transporteinrichtung das Rollenmaterial weiter, so dass sich zwischen der Belichtungs- und der Schneideinheit eine Pufferungsschleife bildet. Diese Schleife bewirkt eine vorteilhafte mechanische Entkoppelung zwischen dem an der Schneideinrichtung fixierten Rollenmaterial und dem in der Belichtungseinheit belichteten und transportierten Abschnitt des Rollenmaterials. Mit anderen Worten kann die Belichtung in der Belichtungseinheit fortgesetzt werden, ohne dass beispielsweise durch die Schneideinheit oder eine Transporteinrichtung, durch die der Transport an der Schneideinheit bewirkt wird, an dem Rollenmaterial gezogen wird, was das Belichtungsergebnis nachteilig beeinflussen würde.

Der zweite, zwischen der Schneideinheit und der Entwicklungseinheit vorgesehene Pufferungsbehälter dient gleichermaßen der Entkoppelung zwischen Schneid- und Entwicklungseinheit. Im einzelnen wird, nachdem die Vorderkante eines bestimmten Abschnitts des Rollenmaterials definiert geschnitten wurde, das Rollenmaterial von der Transporteinrichtung der Schneideinheit erst dann weitertransportiert, wenn sich in dem ersten Pufferungsbehälter genügend Rollenmaterial befindet, um das Rollenmaterial zugfrei zu der Transporteinrichtung der Entwicklungseinheit zu transportieren. Dieser Vorgang wird nachfolgend über den geschlossenen, zweiten Pufferungsbehälter durchgeführt, und an der Transporteinrichtung der Entwicklungseinheit erfolgt eine Fixierung. Während in der Belichtungseinheit fortlaufend eine Belichtung durchgeführt werden kann, wird nachfolgend das in dem ersten Pufferungsbehälter zur Pufferung aufgefangene Rollenmaterial solange in den zweiten Pufferungsbehälter umgespult, bis das Ende eines abzutrennenden Abschnitts des Rollenmaterials erreicht wird, was durch eine geeignete Schneidmarke angezeigt werden kann, die von einem Schneidmarkensensor der Schneideinheit erkannt werden kann. Während dieses Vorgangs zieht weder die Transporteinrichtung der Entwicklungseinheit das Material unter Zug aus der Transporteinrichtung der Schneideinheit, noch zieht letztere das Rollenmaterial unter Zug aus der Belichtungseinheit.

Durch diese zugfreie Betriebsweise kann ein gutes (vibrationsfreies) und kontinuierliches Belichtungsergebnis sichergestellt werden. Wenn das Ende eines abzutrennenden Abschnitts erreicht ist, wird von der Schneideinheit ein Schnitt durchgeführt und der abgetrennte Abschnitt kann in die Entwicklungseinheit weitertransportiert werden. Sobald der nach der Schneideinheit angeordnete Pufferungsbehälter somit entleert ist, wird der Beginn des nächsten Abschnitts von der Schneideinheit zu der Entwicklungseinheit weitertransportiert, was üblicherweise bei geschlossenem zweiten Pufferungsbehälter erfolgen wird. Nachfolgend wiederholt sich der oben beschriebene Vorgang.

Wie vorangehend ausgeführt, kann mit dem erfindungsgemäßen Gerät eine Belichtung, ein Schneiden und eine Entwicklung eines längeren Abschnitts von Foto-Rollenmaterial kontinuierlich ohne Anhalten des transportierten Mediums bzw. der Belichtung durchgeführt werden, ohne das Belichtungsergebnis zu gefährden. Das erfindungsgemäße Gerät ist jedoch ohne Umrüstung in gleicher Weise für das Belichten, Entwickeln und Schneiden einzelner, kurzer Bilder geeignet. Hierbei wird der Bildanfang an einer definierten Stelle geschnitten, das Rollenmaterial wird weitertransportiert, bis der Bildanfang an der Entwicklungseinheit fixiert werden kann, und nachfolgend wird das Bildende geschnitten. Das abgeschnittene Bild wird in die Entwicklungseinheit transportiert, dort entwickelt und getrocknet. Nachfolgend wiederholt sich der Vorgang für ein unmittelbar dahinter zu belichtendes Bild. Falls das Ende eines Filmes erreicht wird, der zur Belichtung des Fotomaterials verwendet wird, kann das Rollenmaterial zurückgespult werden, um an dem vorderen Ende des Rollenmaterials mit möglichst wenig Abfall die Belichtung mit einem weiteren Film fortzusetzen.

Bevorzugte Weiterbildungen der erfindungsgemäßen Vorrichtung sind in den weiteren Ansprüchen beschrieben.

Für die Aufnahmekapazität des ersten und/oder zweiten Pufferungsbehälters hat sich eine Kapazität von bis zu fünf Meter Rollenmaterials als günstig erwiesen. Bei dieser Länge können vollständige Filme gängiger Größen auf einem fortlaufenden, eine geeignete Länge aufweisenden Streifen von Foto-Rollenmaterial belichtet und mit dieser Länge abgetrennt werden.

Für die Ausbildung des öffenbaren Verschlusses des ersten und/oder zweiten Pufferungsbehälters hat sich eine Klappe als besonders vorteilhaft herausgestellt.

Wie vorangehend angedeutet, kann die Schneideinheit der erfindungsgemäßen Vorrichtung automatisiert werden, indem sich an der Belichtungseinheit eine Schneidmarken-Druckvorrichtung befindet, die in der Umgebung der belichteten Abschnitte Schneidmarken anbringt, die einen Bildanfang bzw. ein Bildende anzeigen. Um an der geeigneten Stelle zu schneiden, ist an der Schneideinheit ein Schneidmarkensensor vorgesehen, der die genannten Schneidmarken erfasst und ein Signal erzeugt, das an die Schneideinheit derart weitergegeben wird, dass an der entsprechenden Stelle ein Schnitt erfolgt.

Schließlich bietet es Vorteile, wenn die Schneideinheit eine Doppelschnitt-Schneideinrichtung aufweist. In dieser Weise kann mit einem einzigen Bearbeitungsvorgang der unbelichtete Zwischenraum zwischen zwei Bildern herausgetrennt werden. Es muss folglich nicht das Ende eines ersten Bildes und der Anfang eines zweiten Bildes getrennt geschnitten werden, um den unbelichteten Zwischenabschnitt herauszutrennen. Vielmehr erfolgt in einem einzigen Schritt ein Schneiden derart, dass der unbelichtete Streifen entfernt wird.

Die Lösung der oben genannten Aufgabe erfolgt zum anderen durch das im Anspruch 6 beschriebene Verfahren.

Wie vorangehend im Zusammenhang mit der erfindungsgemäßen Vorrichtung ausgeführt, wird bei der neuartigen Betriebsweise zum Belichten, Entwickeln und Schneiden von Foto-Rollenmaterial ein kontinuierliches Belichten und ein kontinuierlicher Transport eines Rollenmaterials an einer Belichtungseinheit durchgeführt. Nachfolgend erfolgt an einer geeigneten Stelle des Rollenmaterials an einer Schneideinheit ein Festhalten oder Fixieren des Rollenmaterials, und es ist erfindungsgemäß eine Pufferung des Rollenmaterials zwischen Schneideinheit und Belichtungseinheit vorgesehen, um einen kontinuierlichen Betrieb der Belichtungseinheit zu ermöglichen, und diese Einheiten in vorteilhafter Weise mechanisch voneinander zu entkoppeln, um das Material zugfrei weitertransportieren zu können, und das Belichtungsergebnis nicht zu gefährden. Dementsprechend erfolgt während einer fortgesetzten Belichtung und Pufferung das Schneiden des Rollenmaterials.

Nachfolgend wird das Rollenmaterial zu einer Entwicklungseinheit transportiert, sobald die Pufferungslänge dem Abstand zwischen Schneid- und Entwicklungseinheit entspricht oder größer als dieser ist. Das Rollenmaterial wird dann an der Entwicklungseinheit fixiert, und vor der Entwicklungseinheit erfolgt ebenfalls eine Pufferung. Um einen vorbestimmten Abschnitt von dem Rollenmaterial abzutrennen, wird dieses weitertransportiert, an einer vorbestimmten Stelle an der Schneideinheit fixiert, geschnitten, und der abgetrennte Abschnitt wird zur Entwicklungseinheit weitertransportiert. Schließlich wird der Weitertransport des Rollenmaterials zu der Entwicklungseinheit fortgesetzt, sobald ein Pufferungsbehälter, der vor der Entwicklungseinheit angeordnet ist, entleert ist. Mit Hilfe des erfindungsgemäßen Verfahrens können ohne Umrüstaufwand neben dem Belichten, Entwickeln und Schneiden einzelner, kurzer Bilder auch lange Abschnitte von Foto-Rollenmaterial belichtet, geschnitten und entwickelt werden, wobei ein ungestörtes Belichten gewährleistet ist, da aufgrund der vorgesehenen Pufferungen das Material ohne Zug und darüber hinaus ohne Stauungen transportiert wird.

Vorteilhafte Weiterbildungen des erfindungsgemäßen Verfahrens sind in den weiteren Ansprüchen beschrieben.

Um sicherzustellen, dass die Entwicklungseinheit stets zur Aufnahme eines neuen Abschnitts bereit ist, wird die Transporteinrichtung der Entwicklungseinheit mit einer Geschwindigkeit betrieben, die höher ist als die Geschwindigkeit der Transporteinrichtung an der Belichtungseinheit. Dies gewährleistet einen störungsfreien Betrieb.

Im Rahmen des erfindungsgemäßen Verfahrens bietet es Vorteile für die Flexibilität, wenn vorhandene Pufferungsbehälter geöffnet werden, wenn eine Pufferung vorgesehen ist, und geschlossen werden, wenn eine Vorderkante des Rollenmaterials zu einer nachfolgenden Einheit zu transportieren ist.

Wie im Zusammenhang mit der erfindungsgemäßen Vorrichtung angedeutet, bietet es für die Automatisierung im Zusammenhang mit dem erfindungsgemäßen Verfahren ebenfalls Vorteile, wenn an der Belichtungseinheit Schneidmarken aufgebracht werden, und an der Schneideinheit eine Erfassung der Schneidmarken erfolgt, um den Anfang und das Ende eines Bildes oder eines Abschnittes automatisch zu erkennen und einen geeigneten Schnitt zu bewirken.

### Kurze Beschreibung der Zeichnungen

Nachfolgend wird eine beispielhaft in den Zeichnungen dargestellte Ausführungsform der Erfindung näher erläutert.
Es zeigen:
- Fig. 1: eine schematische Darstellung der erfindungsgemäßen Vorrichtung beim Belichten von Rollenmaterial;
- Fig. 2: eine schematische Darstellung der erfindungsgemäßen Vorrichtung beim Puffern von Rollenmaterial;
- Fig. 3: eine schematische Darstellung der erfindungsgemäßen Vorrichtung beim Weitertransport des Rollenmaterials zu einer Entwicklungseinheit;
- Fig. 4: eine schematische Darstellung der erfindungsgemäßen Vorrichtung bei einer zweiten Pufferung; und
- Fig. 5: eine schematische Darstellung der erfindungsgemäßen Vorrichtung beim Schneiden eines Bildendes.

Ausführliche Beschreibung einer bevorzugten Ausführungsform der Erfindung

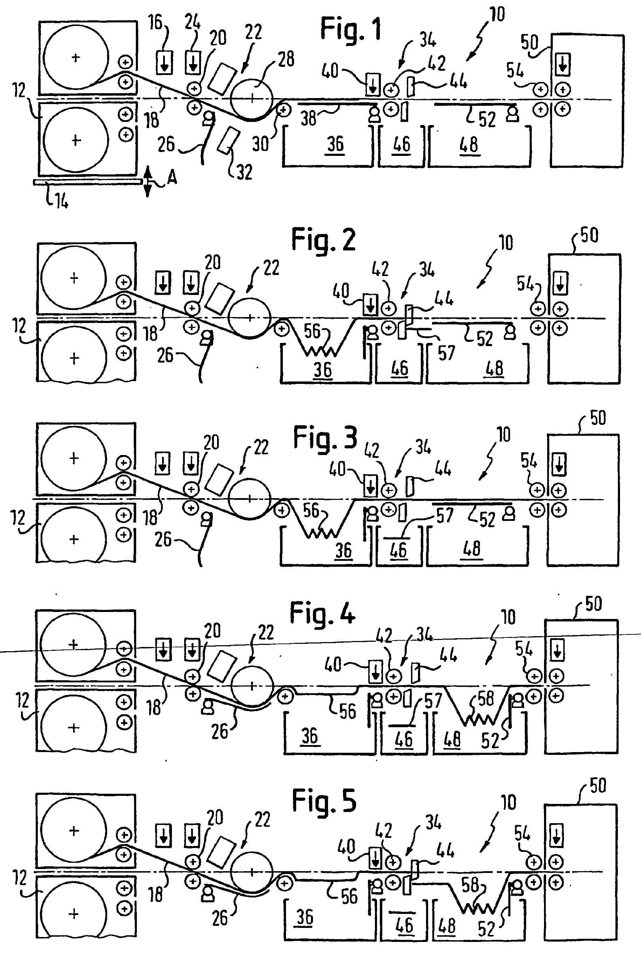

Zu der in den Figuren dargestellten bevorzugten Ausführungsform der erfindungsgemäßen Vorrichtung 10 sie vorab angemerkt, dass diese zahlreiche Merkmale und Aspekte aufweist, die insgesamt dem Zweck der Erfindung, nämlich eine zuverlässig arbeitende und flexibel einsetzbare Vorrichtung zu schaffen, förderlich sind und somit als zur Erfindung gehörig anzusehen sind. Im einzelnen weist die erfindungsgemäße Vorrichtung 10 in Richtung des Materialtransportes, also von links nach rechts gemäß den Figuren, zunächst eine für eine untere Papierkassette 12 angedeutete Führungsschiene 14 auf, die in Richtung des Pfeiles A hinsichtlich der Arbeitshöhe einstellbar, insbesondere automatisch einstellbar ist oder durch geeignete Papierführungen umschaltbar ist. Ein besonders effizienter Betrieb kann dadurch erreicht werden, dass Positionen für zwei Kassetten mit Foto-Rollenmaterial vorgesehen sind, wie in Fig. 1 angedeutet ist, so dass sich ein Wechsel der Kassette besonders schnell durchführen lässt. Unmittelbar stromabwärts von der Papierkassette ist ein Zugkraftsensor 16 vorgesehen (dieser Sensor ist nicht zwingend notwendig, wenn die mechanische Entkoppelung auch ohne Schleife ausreicht), der den Zustand des abgewickelten Rollenmaterials 18 zwischen der Kassette und der Transporteinrichtung 20 einer Belichtungseinheit 22 erfasst, um eine gewisse Pufferschleife in diesem Bereich sicherzustellen, und die Übertragung von Vibrationen zu der Belichtungseinheit 22 zu verhindern. In diesem Bereich befindet sich ferner ein Papierendsensor 24, der ein Ende des Rollenmaterials erfasst. Die genannte Transporteinrichtung 20 der Belichtungseinheit 22 besteht aus zwei Walzen, die als Bremswalzen betrieben werden können. Eine gemäß der Darstellung in den Figuren nach unten geklappte Einfädelführung 26 ist vorgesehen, um den Einfädelvorgang des Rollenmaterials an eine Belichtungstrommel 28 der Belichtungseinheit 22 zu erleichtern. Mit 30 ist eine Andruckwalze bezeichnet. Schließlich ist in der Umgebung der Belichtungseinheit 22 eine Schneidmarken-Druckvorrichtung 32 vorgesehen, um in Zusammenhang mit der Belichtung des Rollenmaterials 18 Schneidmarken auf das Rollenmaterial aufzubringen. Ferner wird an der Belichtungstrommel 28 durch nicht näher gezeigte Maßnahmen eine Belichtung des Foto-Rollenmaterials bewirkt. Zwischen der Belichtungseinheit 22 und der Schneideinheit 34 befindet sich ein erster Pufferungs- oder Auffangbehälter 36, der durch eine schematisch angedeutete Klappe 38 schließ- und öffenbar ist. An der Schneideinheit 34 ist ein Schneidmarkensensor 40 angeordnet, um die von der Schneidmarken-Druckvorrichtung 32 aufgebrachten Schneidmarken zu erfassen. Eine Transporteinrichtung 42 der Schneideinheit 34 in Form von zwei Walzen, zwischen denen das Rollenmaterial 18 transportiert wird, ist fixierbar, also das Rollenmaterial anhaltbar, gestaltet. An der Schneideinheit 34 ist ferner die eigentliche Schneidvorrichtung 44 angedeutet, unter der sich ein Abfallbehälter 46 befindet, in den jegliche abgetrennte und nicht benötigte Abschnitte.fallen können.

Ein zweiter Pufferungs- oder Auffangbehälter 48 befindet sich zwischen der Schneideinheit 34 und einer Entwicklungseinheit 50. Auch der zweite Pufferungsbehälter 48 ist durch eine angedeutete Klappe 52 schließ- und öffenbar. Unmittelbar vor der Entwicklungseinheit 50 befindet sich eine dieser zugeordnete, fixierbare Transporteinrichtung 54, die ebenfalls aus zwei Transportwalzen besteht. Zwischen den Rollen 30, 34 und 54 können weitere Rollen angeordnet sein, um die Übergabe über die Pufferbehälter zu erleichtern.

Mit Hilfe der in Fig. 1 gezeigten Vorrichtung kann das folgende Verfahren zum Belichten, Schneiden und Entwickeln von Foto-Rollenmaterial beliebiger Länge durchgeführt werden. In Fig. 1 ist ein Zustand gezeigt, in dem das Foto-Rollenmaterial mit Hilfe der hierfür nach oben geklappten Einfädelvorrichtung 26 an der Belichtungstrommel 28 und insbesondere zu der Andruckwalze 30 eingefädelt wurde. An der Belichtungstrommel 28 erfolgt fortan ohne Unterbrechung ein Belichten. Aufgrund der im Bereich zwischen Papierkassette und Belichtungstrommel 28 vorgesehenen, durch den Sensor 16 erfassten Schlaufe, wird das Rollenmaterial zugfrei zugeführt. Von der Belichtungseinheit 22 wird die Vorderkante des Rollenmaterials über die in diesem Fall geschlossene Klappe 38 des ersten Pufferungsbehälters 36 zu der Schneideinheit 34 geführt. Durch den Sensor 40 wird eine Vorderkante bzw. ein Bildanfang erfasst, und das Rollenmaterial wird durch die fixierbare Transporteinrichtung 42 an einer geeigneten Stelle festgehalten. Sobald dieses Festhalten erfolgt ist, führt die fortgesetzte Belichtung an der Belichtungseinheit 22 dazu, dass das Rollenmaterial gewissermaßen in den ersten Pufferungsbehälter 36 geschoben und dort gepuffert wird.

Dies ist in Fig. 2 dargestellt. Insbesondere ist hier eine Pufferungsschleife 56 angedeutet. Während der Pufferung wird in der Belichtungseinheit 22 weiter belichtet. Sobald die erforderliche mechanische Entkoppelung zwischen der Belichtungseinheit 22 und der Schneideinheit 34 erreicht ist, erfolgt durch die Transporteinrichtung 42 der Schneideinheit 34 ein Weitertransport über eine vergleichsweise kurze Strecke, die dementsprechend für Störungen unanfällig ist, bis sich ein Bildanfang an der Schneidvorrichtung 44 befindet und hier abgetrennt wird. Ein an der Vorderkante abgetrennter Abschnitt 58 kann in den Abfallbehälter 46 fallen. Es sei erwähnt, dass üblicherweise vor einem ersten Bild an dem später abgetrennten Abschnitt 58 ein Vorspannbild erzeugt wird, das im Wesentlichen lediglich eine geeignete Schneidmarke aufweist. Sobald der Bildanfang an einer definierten Stelle geschnitten wurde, erfolgt der Weitertransport von der Schneideinheit zu der Entwicklungseinheit 50.

Wie in Fig. 3 angedeutet ist, ist hierzu die Klappe 52 des zweiten Pufferungsbehälters 48 geschlossen, und die freie Vorderkante des Rollenmaterials kann über die geschlossene Klappe transportiert werden. Da zumindest bis zu dem Zeitpunkt, zu dem die Vorderkante die Transporteinrichtung 54 der Entwicklungseinheit 50 erreicht, die Belichtung an der Belichtungseinheit 22 fortgesetzt werden kann, wird die Pufferungsschleife 56 im Wesentlichen nicht kleiner.

In Fig. 4 ist gezeigt, wie bis zu dem Zeitpunkt, zu dem ein Bildende an die Schneideinheit 34 gelangt, gegebenenfalls unter weiterer Belichtung in der Belichtungseinheit 22 ein Umspulen von dem ersten Pufferungsbehälter 36 in den zweiten Pufferungsbehälter 48 erfolgen kann. Wie erwähnt, kann in dieser Situation weiter belichtet werden, so dass die Pufferungsschleife 56 nicht kleiner werden muss. In Fig. 4 ist jedoch eine Situation gezeigt, in der die Belichtung beendet wurde, so dass das Rollenmaterial ausschließlich von dem ersten Pufferungsbehälter in den zweiten Pufferungsbehälter 48 transportiert wird und die Pufferungsschleife 56 dementsprechend verkleinert wird. Während der Pufferung in dem zweiten Pufferungsbehälter 48 bildet sich in diesem Behälter eine Pufferungsschleife 58 aus, nachdem die Klappe 52 dieses Behälters geöffnet wurde. Mit Hilfe des Sensors 40 wird währenddessen ein Bild- oder Abschnittsende ermittelt, und mit Hilfe der Transporteinrichtung 42 der Schneideinheit wird dieses an die Schneidvorrichtung 44 transportiert und in geeigneter Weise fixiert.

In Fig. 5 ist gezeigt, wie das Abschnittsende durch die Schneideinrichtung 44 geschnitten wird. Nachfolgend wird der nunmehr abgetrennte, im Wesentlichen in dem zweiten Pufferungsbehälter 48 angeordnete Abschnitt an die Entwicklungseinheit 50 übergeben, dort entwickelt und getrocknet. Sobald der zweite Pufferungsbehälter 48 wieder leer ist, kann der nachfolgende Abschnitt, der währenddessen von der Belichtungseinheit 22 fortlaufend belichtet wurde, über die dann wieder geschlossene Klappe 52 des zweiten Pufferungsbehälters 48 an die Transporteinrichtung 54 der Entwicklungseinheit 50 gebracht werden, und in der selben Art und Weise, wie der vorangehende Abschnitt, abgetrennt und nachfolgend entwickelt werden. Falls zu irgend einem Zeitpunkt kein belichteter Abschnitt mehr folgt, kann das Papier so zurückgespult werden, dass sich eine freie Vorderkante des Rollenmaterials im Bereich zwischen Belichtungstrommel 28 und Andruckwalze 30 befindet, so dass ausgehend aus dieser Situation die nächste Belichtung vorgenommen werden kann. Durch die vorgesehenen Pufferungen und die dadurch erreichte mechanische Entkoppelung kann stets ein erschütterungs-, vibrations- und unterbrechungsfreier Belichtungsbetrieb gewährleistet werden. Es sei noch angemerkt, dass ergänzend ein (nicht dargestellter) Rückseitendrucker vorgesehen sein kann, um die Rückseite des Fotopapiers beispielsweise mit einer Auftragsnummer zu versehen. In diesem Falle ist es vorteilhaft, wenn die nachfolgenden Transportwalzen Aussparungen aufweisen, um ein Verwischen der Tinte zu vermeiden.

## Patentansprüche

1. Vorrichtung (10) zum Belichten. Entwickeln und Schneiden von Foto-Rollenmaterial (18), mit einer Belichtungseinheit (22) mit zugeordneter Transporteinrichtung (20), einer Schneideinheit (34) mit zugeordneter Transporteinrichtung (42) zum Transportieren und/oder Festhalten des Rollenmaterials (18), einer Entwicklungseinheit (50) mit zugeordneter Transporteinrichtung (54) zum Transportieren und/oder Festhalten des Rollenmaterials (18), einem ersten Pufferungsbehälter (36) zwischen der Belichtungseinbeit (22) und der Schneideinheit (34) mit wahlweise einem geschlossenen Zustand zum Transportieren des Rollenmaterials (18) über den Pufferungsbehälter (36) und einem offenen Zustand zur Puf-ferung des Rollenmaterials (18) in dem Pufferungsbehälter (36) und einem zweiten Pufferungsbehälter (48) zwischen der Schneideinheit (34) und der Entwicklungseinheit (50) mit wahlweise einem geschlossenen Zustand zum Transportieren des Rollenmaterials (18) über den Pufferungsbehälter (48) und einem offenen Zustand zur Pufferung des Rollenmaterials (18) in dem Pufferungsbehälter (48).

2. Vorrichtung nach Anspruch 1, **dadurch gekennzeichnet, dass** der erste (36) und/oder der zweite (48) Pufferungsbehälter eine Aufnahmekapazität von mehreren Metern insbesondere bis zu 5 Meter Rollenmaterial (18) aufweist.

3. Vorrichtung nach Anspruch 1 oder 2, **dadurch gekennzeichnet, dass** der erste (36) und/oder der zweite (48) Pufferungsbehälter durch eine Klappe (38,52) schließ- und öffenbar ist.

4. Vorrichtung nach einem der vorangehenden Ansprüche, **dadurch** gekennzeichnct, dass diese an der Belichtungseinheit eine Schneidmarken-Druckvorrichtung (32) und an der Schneideinheit (34) einen Schneidmarkensensor (40) aufweist.

5. Vorrichtung nach einem der vorangehenden Ansprüche, **dadurch gekennzeichnet, dass** die Schneideinheit (34) eine Doppelschnitt-Schneideinrichtung aufweist.

6. Verfahren zum Belichten. Entwickeln und Schneiden von Foto-Rollenmaterial unter Verwendung einer Vorrichtung gemäß einem der Ansprüche 1 bis 5, **dadurch gekennzeichnet, dass** zwischen einer Bel ichtungseinheit und einer Schneideinheit und/oder zwischen der Schneideinheit und einer Entwicklungseinheit bedarfsweise eine Pufferung des Rollenmaterials in einem Pufferungsbehälter erfolgt.

7. Verfahren nach Anspruch 6, **dadurch gekennzeichnet. dass** der Weitertransport an der Entwicklungseinheit mit einer höheren Geschwindigkeit erfolgt, als der Transport an der Belichtungseinheit.

8. Verfahren nach Anspruch 6 oder 7, **dadurch gekennzeichnet, dass** ein Pufferungsbehälter geöffnet wird, wenn eine Pufferung vorgesehen ist, und geschlossen wird, wenn eine freie Vorderkante des Rollenmaterials zu einer nachfolgenden Einheit transportiere wird.

9. Verfahren nach einem der Ansprüche 6 bis 8, **dadurch gekennzeichnet, dass** an der Belichtungseinheit eine Schneidmarke aufgebracht, und diese an der Schneidcinheit erfasst wird.

## Claims

1. Device (10) for exposing, developing and cutting photographic reeled material (18), with an exposure unit (22) with associated transport mechanism (20), a cutting unit (34) with associated transport mechanism (42) for transporting and/or immobilising the reeled film material (18), a developer unit (50) with associated transport mechanism (54) for transporting and/or immobilising the reeled film material (18), a first buffer container (36) between the exposure unit (22) and the cutting unit (34) which can be selectively placed in a closed state to transport the reeled material (18) above the buffer container (36) and an open state for buffering the reeled material (18) in the buffer container (36), and a second buffer container (48) between the cutting unit (34) and the developer unit (50) with can be selectively placed in a closed state to transport the reeled material (18) above the buffer container (48) and an open state for buffering the reeled material (18) in the buffer container (48).

2. Device as claimed in claim 1, **characterised in that** the first (36) and/or the second (48) buffer container has a catchment capacity of several metres, in particular up to 5 metres of reeled material (18).

3. Device as claimed in claim 1 or 2, **characterised in that** the first (36) and/or the second (48) buffer container can be closed and opened by means of a flap (38, 52).

4. Device as claimed in one of the preceding claims, **characterised in that** it has a cut marker printing device (32) on the exposure unit and a cut marker sensor (40) on the cutting unit (34).

5. Device as claimed in one of the preceding claims, **characterised in that** the cutting unit (34) has a dual-cut cutting mechanism.

6. Method of exposing, developing and cutting photographic reeled material using a device as claimed in one of claims 1 to 5, **characterised in that** the reeled material is buffered in a buffer container between an exposure unit and a cutting unit and/or between the cutting unit and a developer unit if necessary.

7. Method as claimed in claim 6, **characterised in that** the feed to the developer unit is operated at a higher speed than the feed alongside the exposure unit.

8. Method as claimed in claim 6 or 7, **characterised in that** a buffer container is opened to enable buffering and closed to enable a free leading edge of the reeled material to be transported to the next unit.

9. Method as claimed in one of claims 6 to 8, **characterised in that** a cut marker is applied at the exposure unit and this is detected at the cutting unit.

## Revendications

1. Dispositif (10) servant à éclairer, à développer et à découper de la matière photographique en rouleau (18), avec une installation d'éclairage (22) avec installation de transport associée (20), une unité de découpage (34) avec installation de transport associée (42) pour transporter et/ou tenir la matière en rouleau (18), une unité de développement (50) avec installation de transport associée (54) pour transporter et/ou tenir la matière en rouleau (18), un premier récipient de tamponnage (36) entre l'unité d'éclairage (22) et l'unité de découpage (34) avec sélectivement un état fermé pour le transport de la matière en rouleau (18) sur le récipient de tamponnage (36) et un état ouvert pour le tamponnage de la matière en rouleau (18) dans le récipient de tamponnage (36), et un deuxième récipient de tamponnage (48) entre l'unité de découpage (34) et l'unité de développement (50) avec sélectivement un état fermé pour le transport de la matière en rouleau (18) sur le récipient de tamponnage (48) et un état ouvert pour le tamponnage de la matière en rouleau (18) dans le récipient de tamponnage (48).

2. Dispositif selon la revendication 1, **caractérisé en ce que** le premier (36) et/ou le deuxième (48) récipient de tamponnage a une capacité de réception de plusieurs mètres, en particulier jusqu'à 5 mètres de matière en rouleau (18).

3. Dispositif selon la revendication 1 ou 2, **caractérisé en ce que** le premier (36) et/ou le deuxième (48) récipient de tamponnage peut être fermé et ouvert par un volet (38, 52).

4. Dispositif selon l'une des revendications précédentes, **caractérisé en ce que** celui-ci présente à l'unité d'éclairage un dispositif d'impression à marques de découpe (32) et à l'unité de découpage (34) un capteur de marques de découpage (40).

5. Dispositif selon l'une des revendications précédentes, **caractérisé en ce que** l'unité de découpage (34) présente une unité de découpage de coupe double.

6. Procédé pour éclairer, développer et découper de la matière photographique en rouleaux en utilisant un dispositif selon l'une des revendications 1 à 5, **caractérisé en ce que**, entre une unité d'éclairage et une unité de découpage et/ou entre l'unité de découpage et une unité de développement a lieu en cas de besoin un tamponnage de la matière en rouleau dans un récipient de tamponnage.

7. Procédé selon la revendication 6, **caractérisé en ce que** le transport ultérieur à l'unité de développement a lieu à une vitesse plus élevée que le transport à l'unité d'éclairage.

8. Procédé selon la revendication 6 ou 7, **caractérisé en ce qu'**un récipient de tamponnage est ouvert lorsqu'un tamponnage est prévu et est fermé lorsqu'un bord avant libre de la matière en rouleau est transporté vers une unité suivante.

9. Procédé selon l'une des revendications 6 à 8, **caractérisé en ce qu'**à l'unité d'éclairage, une marque de découpage est appliquée, et celle-ci est détectée à l'unité de découpage.
